# EUROPEAN PATENT SPECIFICATION

(11) **EP 3 715 134 B1**
(45) Date of publication and mention of the grant of the patent: **08.01.2025**
(21) Application number: 20153485.6
(22) Date of filing: 24.01.2020
(51) Int. Cl.: B41J 2/175, B41J 2/18, B41J 2/195

(54) **LIQUID CIRCULATION DEVICE FOR MACHINE TOOL AND TANK**
FLÜSSIGKEITSUMLAUFVORRICHTUNG FÜR WERKZEUGMASCHINE UND TANK
DISPOSITIF DE CIRCULATION DE LIQUIDE POUR MACHINE-OUTIL ET RÉSERVOIR

(30) Priority: 29.03.2019 JP 2019065617
(43) Date of publication of application: 30.09.2020
(73) Proprietor: Sumitomo Heavy Industries Finetech, Ltd., Kurashiki-shi, Okayama 713-8501 (JP)
(72) Inventor: NISHIZAWA, Shinya, Okayama,, 713-8501, (JP)
(74) Representative: Louis Pöhlau Lohrentz

(56) References cited:
- EP-A1- 1 384 589
- EP-A1- 2 821 229
- WO-A1-2019/058719
- JP-A- 2000 003 048
- JP-A- 2004 268 244
- JP-A- H04 219 189

## Description

### BACKGROUND OF THE INVENTION

### Field of the Invention

The present invention relates to a liquid circulation device for a machine tool and a tank.

### Description of Related Art

In a machine tool such as a grinder, a temperature of a machining unit is adjusted by flowing a liquid such as a coolant liquid to the machining unit. As a device for supplying such a liquid, there is a liquid circulation device that adjusts a temperature of a liquid while circulating the liquid between the device and the machine tool (for example, refer to Japanese Unexamined Patent Publication No. 5-138492). The liquid circulation device includes a heat exchanger (cooling coil) and a temperature controller (cryocooler) for adjusting a temperature of the heat exchanger, and adjusts the temperature of the liquid by disposing the heat exchanger in the liquid to be circulated.

Japanese patent document JP H04 219189 A discloses a treatment equipment for waste liquid of nonsilver salt photosensitive material, which is equipped with a means for heating the waste liquid to vaporize and concentrate it, a means for cooling and condensing the vapor generated thereby and a means for storing this condensate.

Japanese patent document JP 2004 268244 A discloses a liquid circulation devise according to the preamble of claims 1 and 5.

### SUMMARY OF THE INVENTION

The liquid that flows to the machining unit of the machine tool includes a metal scarp generated in machining. The metal scarp is usually separated and recovered from the liquid. However, it is difficult to completely recover the metal scarp, and when the heat exchanger is disposed in the liquid without any ingenuity, a problem arises in that the metal scarp in the liquid is deposited on the heat exchanger to lower heat exchange efficiency of the heat exchanger. Further, the heat exchanger is disposed in a tank having a large capacity for storing the liquid. Accordingly, when the heat exchanger is disposed in the tank without any ingenuity, a problem arises in that a liquid that is cooled down around the heat exchanger and a liquid of a high temperature away from the heat exchanger are generated and thus the temperature of the liquid sent to the machine tool is not stable.

An object of the present invention is to provide a liquid circulation device capable of suppressing a deposition of a metal scarp in a liquid on a heat exchanger and uniformly adjusting a temperature of the liquid and a tank.

A liquid circulation device for a machine tool according to the present invention includes a tank which has an introduction portion and a lead-out portion of a liquid, and in which a liquid circulated between the machine tool and the tank is stored; and a heat exchanger disposed in the tank, where the tank has a throttle portion in which a cross-sectional area of a liquid passage between the introduction portion and the lead-out portion is reduced and a first storage portion on the introduction portion side from the throttle portion, and at least a portion of the heat exchanger is disposed in the throttle portion.

Another liquid circulation device for a machine tool according to the present invention includes a first storage portion; another storage portion of which at least a portion is disposed below the first storage portion, and which has a larger liquid capacity than that of the first storage portion; and a heat exchanger disposed inside the first storage portion, where an opening portion through which the first storage portion communicates with the other storage portion is provided at a lower portion of the first storage portion, and at least a portion of the heat exchanger is disposed in the opening portion.

According to the present invention, a liquid circulation device capable of suppressing a deposition of a metal scarp in a liquid on a heat exchanger and uniformly adjusting a temperature of the liquid and a tank can be provided.

### BRIEF DESCRIPTION OF THE DRAWINGS

Fig. 1 is a circuit diagram showing a liquid circulation device according to an embodiment of the present invention.
Fig. 2 is a diagram showing a configuration of a temperature control unit of Fig. 1.
Fig. 3 is a partially broken plan view of the temperature control unit of Fig. 1 as viewed from above.
Fig. 4A is a diagram showing a first modification example of the temperature control unit and Fig. 4B is a diagram showing a second modification example of the temperature control unit.

### DETAILED DESCRIPTION OF THE INVENTION

Hereinafter, an embodiment of the present invention will be described in detail with reference to the drawings.

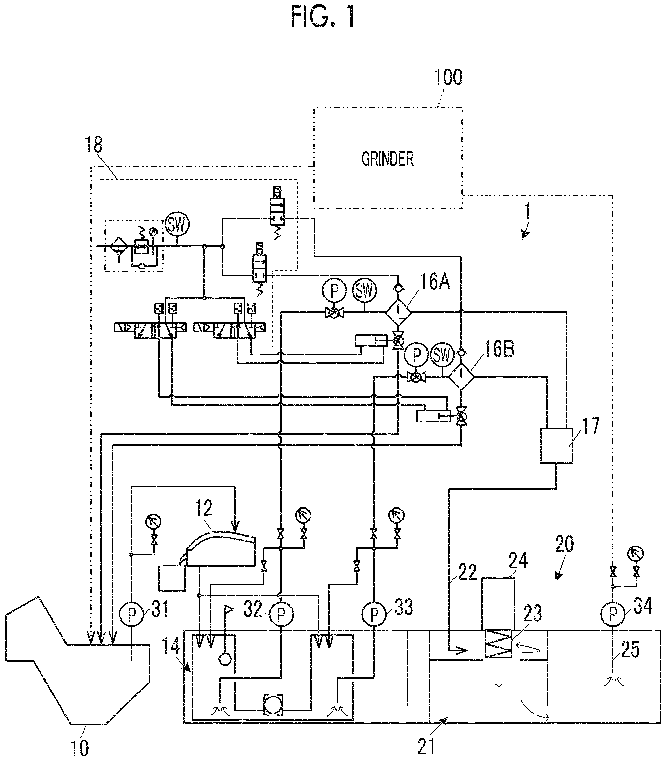

Fig. 1 is a circuit diagram showing a liquid circulation device according to an embodiment of the present invention.

A liquid circulation device 1 of the present embodiment is a device that adjusts a temperature of a liquid while circulating the liquid between the liquid circulation device 1 and a machine tool 100 such as a grinder. As the liquid, various liquids such as a coolant liquid and fresh water can be used. The liquid circulation device 1 includes a sludge conveyor 10 that receives a liquid that has flowed to a machining unit of the machine tool 100, a separator 12 that separates a metal scarp (sludge) from a liquid sucked up from the sludge conveyor 10, a septic tank 14 for purifying the liquid separated from the metal scarp by the separator 12, a first filter 16A and a second filter 16B for filtering the liquid sucked up from the septic tank 14, and a temperature control unit 20 for introducing the liquid filtered by the first filter 16A or the second filter 16B through a collecting pipe 17. The first filter 16A and the second filter 16B are alternately used in a predetermined cycle, and when one is used in a cycle, the other is washed. The first filter 16A and the second filter 16B may be cleaned by air cleaning equipment 18 using compressed air. The temperature control unit 20 adjusts the temperature of the introduced liquid. Then, the liquid of which the temperature is adjusted by the temperature control unit 20 is sucked up by a pump 34 and sent to the machine tool 100. The liquid is forcibly fed between the respective portions by pumps 31 to 34. A pressure gauge may be provided at lead-out portions of the pumps 31 to 34, and the pressure of the pumps 31 to 34 may be measured.

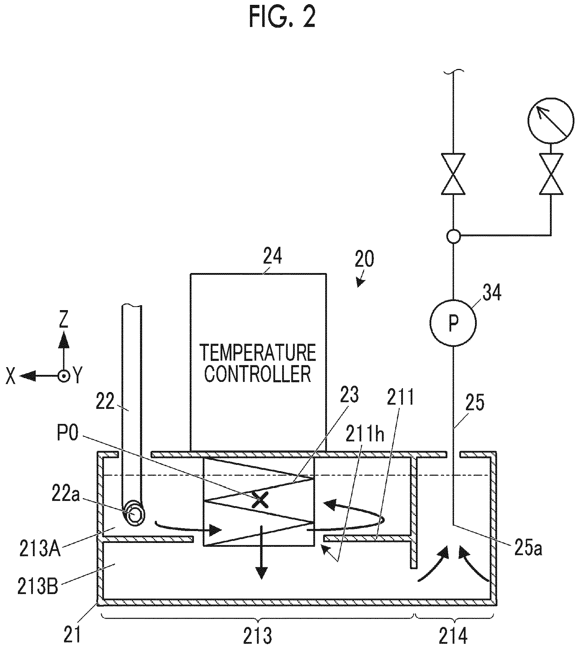

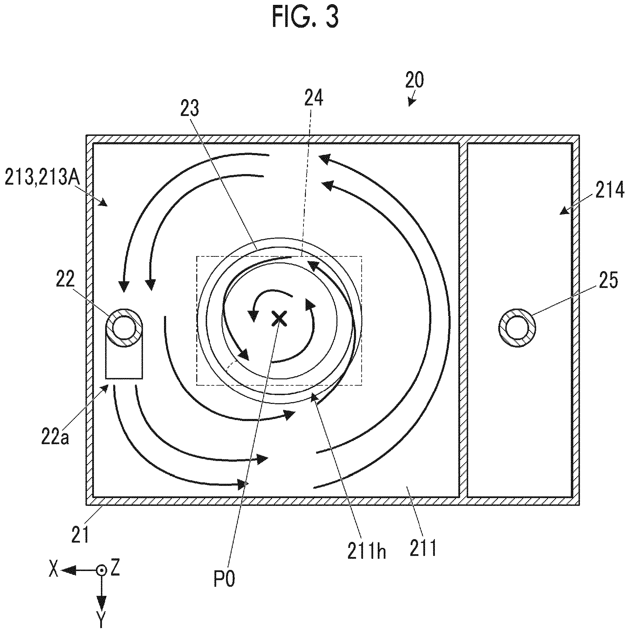

Fig. 2 is a diagram showing a configuration of the temperature control unit. Fig. 2 is a partially broken side view showing an inside of the temperature control unit 20. Fig. 3 is a partially broken plan view of the temperature control unit as viewed from above. In Fig. 3, a temperature controller 24 is indicated by an imaginary line. In Figs. 2 and 3, a flow of a liquid is indicated by a thick arrow line.

The temperature control unit 20 includes a tank 21 for storing a liquid, an introduction pipe 22 for introducing the liquid, a heat exchanger 23 disposed in the liquid, a temperature controller 24 for controlling the temperature of the heat exchanger 23, and a lead-out pipe 25 for leading out the liquid.

The tank 21 is provided with a two-layer structure 213 of which a space is partitioned by a horizontal partition plate 211 and a second storage portion 214 in which a liquid before derivation is stored. The partition plate 211 partitions the two-layer structure 213 into upper and lower two layers of an upper storage portion 213A and a lower storage portion 213B. The partition plate 211 has a through-hole 211h at the center, and the upper storage portion 213A and the lower storage portion 213B communicate with each other through the through-hole 211h. The upper storage portion 213A may have a flow path (not shown) which returns the liquid to, for example, the septic tank 14 when the liquid overflows. The upper storage portion 213A according to one example of the first storage portion according to the present invention. The configuration in which the lower storage portion 213B and the second storage portion 214 are combined corresponds to one example of the other storage portion according to the present invention. The capacity of the upper storage portion 213A is smaller than a total capacity of the lower storage portion 213B and the second storage portion 214. The through-hole 211h corresponds to one example of a throttle portion and an opening portion according to the present invention.

The heat exchanger 23 is disposed above the through-hole 211h such that a portion of the heat exchanger 23 is located in the through-hole 211h. That is, the heat exchanger 23 is disposed at a center P0 of the upper storage portion 213A in a horizontal direction. The heat exchanger 23 may have a coil-shaped structure. The temperature controller 24 is disposed on the tank 21 and connected to the heat exchanger 23.

A liquid feed-out port 22a of the introduction pipe 22 is disposed in the liquid of the upper storage portion 213A, and at a position separated from the center P0 of the upper storage portion 213A in the horizontal direction, in a horizontal X direction (Figs. 2 and 3). Further, the feed-out port 22a is disposed in a direction for sending-out the liquid in a horizontal Y direction substantially orthogonal to the X direction (Fig. 3). Further, the through-hole 211h is disposed in a -Z direction (direction orthogonal to the X direction and the Y direction, that is, a vertical direction) from the center P0 of the upper storage portion 213A (Fig. 2). The feed-out port 22a is disposed at a position higher than a bottom of the upper storage portion 213A. A feed-out port 22a of the introduction pipe 22 corresponds to one example of an introduction portion according to the present invention.

The second storage portion 214 communicates with the lower storage portion 213B, and the liquid of which the temperature is adjusted is sent from the lower storage portion 213B. A suction port 25a of the lead-out pipe 25 is disposed in the liquid of the second storage portion 214. The lead-out pipe 25 leads out the liquid from the second storage portion 214 to the machine tool 100 by driving the pump 34. The suction port 25a of the lead-out pipe 25 corresponds to one example of a lead-out portion according to the present invention.

### <Description of Operation>

The liquid circulation device 1 continuously circulates the liquid by driving the pumps 31 to 34 during an operation of the machine tool 100. That is, the liquid that has flowed to the machining unit of the machine tool 100 is first sent to the sludge conveyor 10, and a large amount of metal scarp is recovered. The liquid stored in the sludge conveyor 10 is sent to the separator 12 and separated from the metal scarp by using a magnetic force. Then, the liquid from which the metal scarp is separated is sent to the septic tank 14. The driving of the pump 32 and the driving of the other pump 33 are switched in a predetermined cycle. In a certain cycle, the liquid is sucked up from the septic tank 14 by the driving of the pump 32 and filtered by the first filter 16A. While the liquid is filtered by the first filter 16A, the second filter 16B is cleaned. In another cycle, the liquid is sucked up from the septic tank 14 by the driving of the pump 33 and filtered by the second filter 16B. While the liquid is filtered by the second filter 16B, the first filter 16A is cleaned. The liquid filtered by the first filter 16A or the second filter 16B is sent to the tank 21 of the temperature control unit 20 through the introduction pipe 22.

The liquid sent out from the feed-out port 22a of the introduction pipe 22 generates a turning flow in the upper storage portion 213A as shown in Figs. 2 and 3 according to the direction and the disposition of the feed-out port 22a described above. For this reason, the liquid in the upper storage portion 213A crosses the heat exchanger 23 at a relatively large flow rate and passes through the through-hole 211h in the center of the partition plate 211 to be sent to the lower storage portion 213B. In addition, a cross-sectional area of the liquid passage between the upper storage portion 213A and the lower storage portion 213B is reduced by the through-hole 211h. Thus, a large flow rate of the liquid can be obtained before and after the liquid passage, and the liquid passes through the vicinity of the heat exchanger 23 at the large flow rate. When the liquid flows around the heat exchanger 23, heat is exchanged with the heat exchanger 23 and the temperature is adjusted (for example, cooling, heating, or both of cooling and heating) . However, since the flow rate of the liquid is large around the heat exchanger 23, the metal scarp mixed with the liquid is prevented from being deposited on the heat exchanger 23. Furthermore, since the liquid sent to the lower storage portion 213B also crosses the heat exchanger 23, the liquid in the lower storage portion 213B is adjusted to a uniform temperature.

The liquid of which the temperature is adjusted is sent from the lower storage portion 213B to the second storage portion 214 and returned to the machine tool 100 by the driving of the pump 34.

As described above, the liquid circulation device 1 according to the present embodiment has the partition plate 211 and the through-hole 211h for reducing the cross-sectional area of the liquid passage in the tank 21 of the temperature control unit 20, and a portion of the heat exchanger 23 is disposed in the through-hole 211h. According to such a configuration, a large flow rate of the liquid can be obtained before and after the through-hole 211h. As a result, since the flow rate of the liquid around the heat exchanger 23 is increased, the metal scarp contained in the liquid can be prevented from being deposited on the heat exchanger 23. Further, since the liquid passes through the vicinity of the heat exchanger 23 equally by disposing the heat exchanger 23 such that a portion of the heat exchanger 23 is included in the through-hole 211h, the temperature of the liquid can be uniformly adjusted. Accordingly, the liquid of which the temperature is efficiently and uniformly adjusted by the heat exchanger 23 can be supplied to the machine tool 100.

Further, according to the liquid circulation device 1 of the present embodiment, in the tank 21 of the temperature control unit 20, the feed-out port 22a of the introduction pipe 22 is disposed so as to face the Y direction crossing the X direction in the liquid, and at a position away from the center of the upper storage portion 213A in the X direction. With such a direction and a disposition, the turning flow can be generated in the liquid in the upper storage portion 213A by the liquid fed out from the feed-out port 22a of the introduction pipe 22. Accordingly, the flow rate of the liquid passing through the vicinity of the heat exchanger 23 can be made larger by the turning of the liquid. Thereby, the metal scarp contained in the liquid can be fur ther prevented from being deposited on the heat exchanger 23.

Furthermore, in the liquid circulation device 1 according to the present embodiment, the through-hole 211h of the partition plate 211 is disposed at a position in the -Z direction from the center P0 of the upper storage portion 213A. The -Z direction is a direction orthogonal to the X direction in which the feed-out port 22a of the introduction pipe 22 is separated from the center P0 and the Y direction in which the liquid is fed out from the feed-out port 22a. According to such a disposition, the liquid turning in the upper storage portion 213A can be sent from the vicinity of the center of the turning to the lower storage portion 213B by the action of the feed-out port 22a. Further, the heat exchanger 23 is disposed near the center of the turning. By such a flow of the liquid and the disposition of the heat exchanger 23, it is possible to further enhance the action of suppressing the deposition of the metal scarp on the heat exchanger 23 and the action of uniformly adjusting the temperature of the liquid by the heat exchanger 23.

Furthermore, in the liquid circulation device 1 according to the present embodiment, the tank 21 of the temperature control unit 20 has the two-layer structure 213 having the upper storage portion 213A and the lower storage portion 213B and adopts the through-hole 211h of the partition plate 211 as a configuration of reducing the cross-sectional area of the liquid passage. Further, as a configuration of turning the liquid, a configuration for turning the liquid in a direction along a horizontal plane is adopted. According to such a configuration, a disposition space for the tank 21 can be reduced, in particular, the area in the horizontal direction where the tank 21 is installed can be reduced, and the turning speed of the liquid can be made higher. In addition, a configuration of reducing the cross-sectional area of the liquid passage can be realized with a small number of materials at a low cost.

Furthermore, the liquid circulation device 1 according to the present embodiment includes the upper storage portion 213A and another storage portion (lower storage portion 213B and second storage portion 214) having a larger capacity, and the heat exchanger 23 is disposed in the upper storage portion 213A having a smaller capacity. The upper storage portion 213A is provided with the through-hole 211h communicating with the lower storage portion 213B. In a case where the heat exchanger 23 is disposed in a large storage portion for storing the entire liquid for adjusting the temperature at once, a liquid passing far from the heat exchanger 23 is generated in the large storage portion, and it is difficult to adjust the temperature of the liquid uniformly. However, by disposing the heat exchanger 23 in the upper storage portion 213A having a capacity smaller than the total amount of the liquid for adjusting the temperature as in the above configuration, the liquid passing through the upper storage portion 213A is reduced while being separated from the heat exchanger, and it is possible to adjust the temperature of the liquid uniformly. In addition, in the upper storage portion 213A, the flow rate can be made relatively large due to the small capacity, and the deposition of the metal scarp on the heat exchanger 23 can be suppressed. Further, a portion of another storage portion (lower storage portion 213B and second storage portion 214) is located below the upper storage portion 213A, and the through-hole 211h for sending the liquid from the upper storage portion 213A to the other storage portion is disposed at a lower portion (for example, a bottom) of the upper storage portion 213A. Accordingly, a liquid flow from above to below is formed in the upper storage portion 213A where the heat exchanger 23 is disposed. Thereby, even when metal scarp is contained in the liquid introduced from the introduction pipe 22, it is easy to flow the metal scarp from the through-hole 211h to the next storage portion (lower storage portion 213B), and the metal scarp can be prevented from being accumulated in the upper storage portion 213A. Thus, the deposition of the metal scarp on the heat exchanger 23 can be further suppressed.

### (Modification Example)

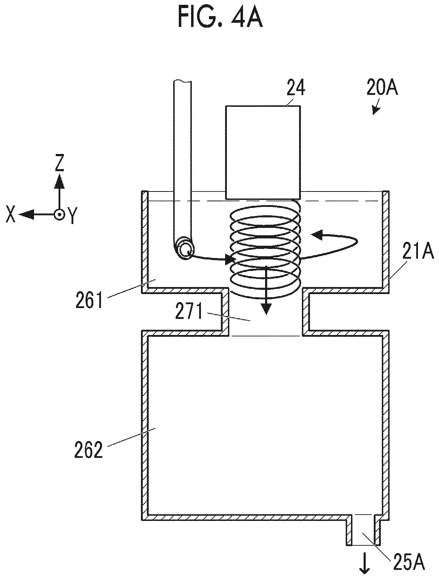

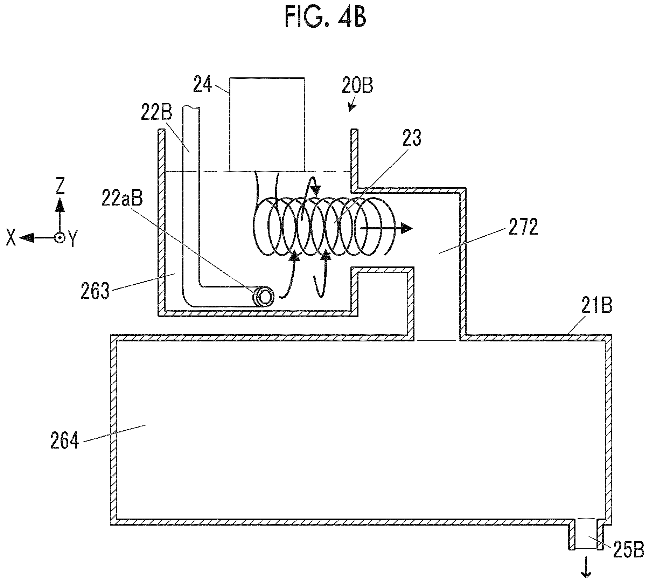

Fig. 4A is a diagram showing a first modification example of the temperature control unit and Fig. 4B is a diagram showing a second modification example of the temperature control unit. In Figs. 4A and 4B, the flow of the liquid is indicated by a thick arrow line.

The liquid circulation device 1 may be provided with a temperature control unit 20A (Fig. 4A) of the first modification example or a temperature control unit 20B (Fig. 4B) of the second modification example instead of the temperature control unit 20 described above.

The temperature control unit 20A of the first modification example has an intervening flow path 271 interposed between the first storage portion 261 and the second storage portion 262, and of which a diameter or a width is made small, as a configuration for reducing the cross-sectional area of the liquid passage in the tank 21A. A portion of the heat exchanger 23 is disposed in the intervening flow path 271. The first storage portion 261 and the second storage portion 262 are vertically arranged side by side. The liquid introduction portion is disposed at a position higher than a bottom of the upper storage portion 213A. The intervening flow path 271 is opened to the lower portion of the first storage portion 261, and allows the liquid to pass vertically. A lead-out portion 25A for leading out the liquid is provided at the lower portion of the second storage portion 262. Even with such a configuration, similarly to the temperature control unit 20 of the embodiment, it is possible to suppress the deposition of the metal scarp on the heat exchanger 23 by increasing the flow rate of the liquid passing through the vicinity of the heat exchanger 23, and it is possible to make the liquid uniformly pass through the vicinity of the heat exchanger 23, and the temperature of the liquid can be uniformly adjusted.

The temperature control unit 20A of the first modification example may be provided with the feed-out port 22a of the introduction pipe 22 in the same direction and disposition as in the embodiment as shown in Fig.4A. By adding such a configuration, also in the first modification example, it is possible to further suppress the deposition of the metal scarp on the heat exchanger 23 by causing the liquid to be turned in the first storage portion 261.

Further, in the temperature control unit 20A of the first modification example, the first storage portion 261 has a smaller liquid capacity than the second storage portion 262, and the heat exchanger 23 is disposed in the first storage portion 261. The second storage portion 262 corresponds to one example of another storage portion according to the present invention, and the intervening flow path 271 corresponds to one example of the opening portion according to the present invention. According to such a configuration, since the heat exchanger 23 is disposed in the first storage portion 261 having a capacity smaller than the total amount of the liquid for adjusting the temperature, the liquid passing through the first storage portion 261 is reduced while being separated from the heat exchanger and the temperature of the liquid can be uniformly adjusted. In addition, in the first storage portion 261, the flow rate can be made relatively large due to the small capacity, and the deposition of the metal scarp on the heat exchanger 23 can be suppressed.

Further, the second storage portion 262 is located below the first storage portion 261, and the intervening flow path 271 for sending the liquid from the first storage portion 261 to the second storage portion 262 is opened at a lower portion (for example, a bottom) of the first storage portion 261. Accordingly, in the first storage portion 261 provided with the heat exchanger 23, even when a liquid flow is formed from above to below and the metal scarp is contained in the liquid introduced to the first storage portion 261, it is easy to flow the metal scarp from the intervening flow path 271 to the second storage portion 262, and the metal scarp can be prevented from being accumulated in the first storage portion 261. Thus, the deposition of the metal scarp on the heat exchanger 23 can be further suppressed.

The temperature control unit 20B of the second modification example has an intervening flow path 272 interposed between a first storage portion 263 and a second storage portion 264, and of which a diameter or a width is made small, as a configuration for reducing the cross-sectional area of the liquid passage in the tank 21B. A portion of the heat exchanger 23 is disposed in the intervening flow path 272. The first storage portion 263 and the second storage portion 264 are vertically arranged side by side but may be laterally arranged side by side. The intervening flow path 272 is provided on the side wall portion of the first storage portion 263 so as to flow the liquid in the horizontal direction from the first storage portion 263. The intervening flow path 272 may communicate with a top surface portion of the second storage portion 264 so as to change the direction in the middle and to flow the liquid in the vertical direction. The second storage portion 264 has a lead-out portion 25B for leading out the liquid. Even with such a configuration, similarly to the temperature control unit 20 of the embodiment, it is possible to suppress the deposition of the metal scarp on the heat exchanger 23 by increasing the flow rate of the liquid passing through the vicinity of the heat exchanger 23. Further, it is possible to make the liquid uniformly pass through the vicinity of the heat exchanger 23, and the temperature of the liquid can be uniformly adjusted.

Also in the temperature control unit 20B of the second modification example, as shown in Fig. 4B, a feed-out port 22aB of an introduction pipe 22B may be disposed in the liquid, at a position separated from the center of the first storage portion 263 in one direction (-Z direction) such that the feed-out port 22aB faces a direction (Y direction) orthogonal to the separated direction. With such a direction and disposition, a flow in which the liquid turns along a Y-Z plane can be generated in the first storage portion 263. The liquid can be moved from the vicinity of the center of the turning of the liquid to the second storage portion 264 via the intervening flow path 272 by disposing the intervening flow path 272 in a direction (-X direction) orthogonal to the Y-Z plane from the center of the first storage section 263. Thus, the deposition of the metal scarp on the heat exchanger 23 can be further suppressed by increasing the flow rate of the liquid passing through the vicinity of the heat exchanger 23.

Heretofore, the embodiment of the present invention has been described. However, the present invention is not limited to the above embodiment. For example, a machine tool to which a liquid is supplied by a liquid circulation device is not limited to a grinder, but may be various machine tools such as a lathe and a milling machine. Further, in the above-described embodiment, the components other than the temperature control unit are shown as examples of the components of the liquid circulation device, but the components other than the temperature control unit can be variously changed. Further, in the above-described embodiment, an example in which a portion of the heat exchanger is disposed in the throttle portion has been described, but the heat exchanger may be partially disposed between the throttle portion and the center of the storage portion on the introduction portion side from the throttle portion. Thereby, the heat exchanger can be easily installed in the tank without bringing the heat exchanger into contact with the throttle portion, and the assembling performance of the tank can be improved while suppressing the lowering of the temperature control function. Further, in the above-described embodiment, a feed-out port of the introduction pipe and a suction port of a lead-out pipe are indicated as an introduction portion for introducing a liquid into a tank and a lead-out portion for deriving the liquid from the tank, but the form is not limited to a tube, and a hole provided in a wall of the tank may be used as the introduction portion or the lead-out portion. In addition, the details shown in the embodiment may be changed as appropriate within the scope of the appended claims.

### Brief Description of the Reference Symbols

1 liquid circulation device
100 machine tool
20, 20A, 20B temperature control unit
21, 21A, 21B tank
22, 22B introduction pipe
22a, 22aB feed-out port (introduction portion)
23 heat exchanger
24 temperature controller
25 lead-out pipe
25a suction port
25A, 25B lead-out portion
211 partition plate
211h through-hole (throttle portion, opening portion)
213 two-layer structure
213A upper storage portion (first storage portion)
213B lower storage portion
214 second storage portion
261, 263 first storage portion
262, 264 second storage portion
271 intervening flow path (throttle portion, opening portion)
272 intervening flow path (throttle portion)

## Claims

1. A liquid circulation device (1) for a machine tool (100), comprising:
a tank (21, 21A, 21B) which has an introduction portion (22a, 22aB) and a lead-out portion (25A, 25B) of a liquid, and in which a liquid circulated between the machine tool (100) and the tank (21, 21A, 21B) is stored; and
a heat exchanger (23) disposed in the tank (21, 21A, 21B),
wherein the tank (21, 21A, 21B) has a throttle portion (211h), in which a cross-sectional area of a liquid passage between the introduction portion (22a, 22aB) and the lead-out portion (25A, 25B) is reduced, and
a first storage portion (213A, 261, 263) on the introduction portion (22a, 22aB) side from the throttle portion, **characterized in that**
at least a portion of the heat exchanger (23) is disposed in the throttle portion.

2. The liquid circulation device (1) for a machine tool (100) according to claim 1,
wherein the introduction portion (22a, 22aB) configured to send out the liquid in a Y direction intersecting an X direction at a position in the liquid separated from a center of the first storage portion (213A, 261, 263) in the X direction.

3. The liquid circulation device (1) for a machine tool (100) according to claim 2,
wherein the throttle portion is disposed in a direction orthogonal to the X direction and the Y direction from the center of the first storage portion (213A, 261, 263) .

4. The liquid circulation device (1) for a machine tool (100) according to any one of claims 1 to 3,
wherein the tank (21, 21A, 21B) has a two-storage structure (213) in which an upper storage portion (213A) and a lower storage portion (213B) are partitioned by a partition plate (211),
a through-hole (211h) is provided as the throttle portion in a portion of the partition plate (211), and
the heat exchanger (23) is disposed above the through-hole (211h).

5. A liquid circulation device (1) for a machine tool (100), comprising:
a first storage portion (261, 263);
another storage portion (262, 264) of which at least a portion is disposed below the first storage portion (261, 263), and which has a larger liquid capacity than that of the first storage portion (261, 263); and
a heat exchanger (23) disposed inside the first storage portion (261, 263),
wherein an opening portion (271) through which the first storage portion (261, 263) communicates with the other storage portion (262, 264) is provided at a lower portion of the first storage portion (261, 263),
**characterized in that**
at least a portion of the heat exchanger (23) is disposed in the opening portion (271).

## Patentansprüche

1. Flüssigkeitszirkulationsvorrichtung (1) für eine Werkzeugmaschine (100), umfassend:
einen Tank (21, 21A, 21B), der einen Einleitungsabschnitt (22a, 22aB) und einen Ausleitungsabschnitt (25A, 25B) einer Flüssigkeit aufweist und in dem eine zwischen der Werkzeugmaschine (100) und dem Tank (21, 21A, 21B) zirkulierende Flüssigkeit gespeichert wird; und
ein Wärmetauscher (23), der in dem Tank (21, 21A, 21B) angeordnet ist,
wobei der Tank (21, 21A, 21B) einen Drosselabschnitt (211h), in dem eine Querschnittsfläche eines Flüssigkeitsdurchgangs zwischen dem Einleitungsabschnitt (22a, 22aB) und dem Ausleitungsabschnitt (25A, 25B) verkleinert ist, und
einen ersten Speicherabschnitt (213A, 261, 263) auf der Seite des Einleitungsabschnitts (22a, 22aB) von dem Drosselabschnitt aufweist, **dadurch gekennzeichnet, dass** mindestens ein Abschnitt des Wärmetauschers (23) in dem Drosselabschnitt angeordnet ist.

2. Flüssigkeitszirkulationsvorrichtung (1) für eine Werkzeugmaschine (100) gemäß Anspruch 1,
wobei der Einleitungsabschnitt (22a, 22aB) konfiguriert ist, die Flüssigkeit in einer Y-Richtung auszusenden, die eine X-Richtung an einer Position in der Flüssigkeit schneidet, die von einer Mitte des ersten Speicherabschnitts (213A, 261, 263) in der X-Richtung getrennt ist.

3. Flüssigkeitszirkulationsvorrichtung (1) für eine Werkzeugmaschine (100) nach Anspruch 2,
wobei der Drosselabschnitt in einer Richtung orthogonal zu der X-Richtung und zu der Y-Richtung von der Mitte des ersten Speicherabschnitts (213A, 261, 263) angeordnet ist.

4. Flüssigkeitszirkulationsvorrichtung (1) für eine Werkzeugmaschine (100) gemäß einem der Ansprüche 1 bis 3,
wobei der Tank (21, 21A, 21B) eine Zwei-Speicher-Struktur (213) aufweist, in der ein oberer Speicherabschnitt (213A) und ein unterer Speicherabschnitt (213B) durch eine Trennplatte (211) getrennt sind,
ein Durchgangsloch (211h) als der Drosselabschnitt in einem Abschnitt der Trennplatte (211) vorgesehen ist und
der Wärmetauscher (23) über dem Durchgangsloch (211h) angeordnet ist.

5. Flüssigkeitszirkulationsvorrichtung (1) für eine Werkzeugmaschine (100), umfassend:
einen ersten Speicherabschnitt (261, 263);
einen weiteren Speicherabschnitt (262, 264), von dem mindestens ein Abschnitt unter dem ersten Speicherabschnitt (261, 263) angeordnet ist und der eine größere Flüssigkeitskapazität als der erste Speicherabschnitt (261, 263) aufweist; und
einen Wärmetauscher (23), der innerhalb des ersten Speicherabschnitts (261, 263) angeordnet ist,
wobei ein Öffnungsabschnitt (271), durch den der erste Speicherabschnitt (261, 263) mit dem anderen Speicherabschnitt (262, 264) kommuniziert, an einem unteren Abschnitt des ersten Speicherabschnitts (261, 263) vorgesehen ist, **dadurch gekennzeichnet, dass**
mindestens ein Abschnitt des Wärmetauschers (23) in dem Öffnungsabschnitt (271) angeordnet ist.

## Revendications

1. Un dispositif de circulation de liquide (1) destiné à une machine-outil (100), comprenant :
un réservoir (21, 21A, 21B) qui possède une partie d'introduction (22a, 22aB) et une partie d'évacuation (25A, 25B) d'un liquide, et dans lequel un liquide circulant entre la machine-outil (100) et le réservoir (21, 21A, 21B) est stocké ; et
un échangeur de chaleur (23) disposé dans le réservoir (21, 21A, 21B),
dans lequel le réservoir (21, 21A, 21B) possède une partie d'étrangleur (211h), dans laquelle une surface transversale d'un passage de liquide entre la partie d'introduction (22a, 22aB) et la partie d'évacuation (25A, 25B) est réduite, et
une première partie de stockage (213A, 261, 263) côté partie d'introduction (22a, 22aB) par rapport à la partie d'étrangleur, **caractérisé en ce que**
au moins une partie de l'échangeur de chaleur (23) est disposée dans la partie d'étrangleur.

2. Le dispositif de circulation de liquide (1) destiné à une machine-outil (100) selon la revendication 1,
dans lequel la partie d'introduction (22a, 22aB) est configurée pour envoyer le liquide dans une direction Y croisant une direction X à un emplacement dans le liquide séparé d'un centre de la première partie de stockage (213A, 261, 263) dans la direction X.

3. Le dispositif de circulation de liquide (1) destiné à une machine-outil (100) selon la revendication 2,
dans lequel la partie d'étrangleur est disposée dans une direction orthogonale par rapport à la direction X et la direction Y par rapport au centre de la première partie de stockage (213A, 261, 263).

4. Le dispositif de circulation de liquide (1) destiné à une machine-outil (100) selon l'une quelconque des revendications 1 à 3,
dans lequel le réservoir (21, 21A, 21B) possède une structure à deux stockages (213) dans laquelle une partie de stockage supérieure (213A) et une partie de stockage inférieure (213B) sont séparées par une plaque de séparation (211),
un orifice traversant (211h) est prévu en guise de partie d'étrangleur dans une partie de la plaque de séparation (211), et
l'échangeur de chaleur (23) est disposé au-dessus de l'orifice traversant (211h).

5. Un dispositif de circulation de liquide (1) destiné à une machine-outil (100), comprenant :
une première partie de stockage (261, 263) ;
une autre partie de stockage (262, 264) dont au moins une partie est disposée en-dessous de la première partie de stockage (261, 263), et qui possède une capacité de liquide supérieure à celle de la première partie de stockage (261, 263) ; et
un échangeur de chaleur (23) disposé à l'intérieur de la première partie de stockage (261, 263),
dans lequel une partie d'ouverture (271) par laquelle la première partie de stockage (261, 263) communique avec l'autre partie de stockage (262, 264) est prévue au niveau d'une partie inférieure de la première partie de stockage (261, 263), **caractérisé en ce que**
au moins une partie de l'échangeur de chaleur (23) est disposée dans la partie d'ouverture (271).
